# EUROPÄISCHE PATENTANMELDUNG

(11) **EP 2 827 288 A1**
(43) Veröffentlichungstag der Anmeldung: **21.01.2015**
(21) Anmeldenummer: 14177017.2
(22) Anmeldetag: 15.07.2014
(51) Int. Cl.: G06Q 10/08

(54) **Verfahren zur Kontrolle eines Parametersatzes eines verderblichen Produktes und Kontrollsystem zur Ausführung des Verfahrens**

(30) Priorität: 18.07.2013 DE 102013011987
(71) Anmelder: Rieber AG, 8360 Eschlikon (CH)
(72) Erfinder: Maier, Max, 71636 Ludwigsburg (DE)
(74) Vertreter: Schumacher & Willsau

(57) **Zusammenfassung**

Die vorliegende Erfindung betrifft ein Verfahren (100) zur Kontrolle eines Parametersatzes (12) eines verderblichen Produktes (14). Erfindungsgemäß ist vorgesehen, dass eine das verderbliche Produkt (14) repräsentierende Identifikation (ID) (16) durch ein Lesegerät (18) erfasst wird, dass das Erfassen der ID (16) eine Erfassung des Parametersatzes (12) des Produktes (14) auslöst, dass ein Vergleich zwischen dem erfassten Parametersatz (12) und einem Referenzparametersatz (20) durchgeführt wird, und dass ein Kontrollsignal (22) basierend auf dem Vergleich erzeugt und dargestellt wird.

Die vorliegende Erfindung betrifft weiterhin ein Kontrollsystem, das zur Ausführung des Verfahrens 100 eingerichtet ist.

## Beschreibung

Die vorliegende Erfindung betrifft ein Verfahren zur Kontrolle eines Parametersatzes eines verderblichen Produktes und ein Kontrollsystem, das zur Ausführung des Verfahrens eingerichtet ist.

Moderne Produktionsketten zur Herstellung und/oder Verarbeitung verderblicher Produkte, beispielsweise Nahrungsmittel, erfordern eine konsequente Überwachung von Parametern oder Parametersätzen und Einhaltung unterschiedlicher Mindeststandards, um die Genießbarkeit der hergestellten und/oder verarbeiteten Produkte sicherzustellen. Dies dient der Sicherheit der Verbraucher, die sich, beispielsweise als Kunden von Großküchen, auf die Unbedenklichkeit der angebotenen verderblichen Produkte verlassen müssen. In diesem Zusammenhang hat sich das HACCP Model ("Hazard Analysis and Critical Control Points") zur Sicherstellung der Lebensmittelhygiene als zweckmäßig erwiesen, was sich beispielsweise auch in der Verordnung Nummer 852/2004 des Europäischen Parlaments und des Rates über die Lebensmittelhygiene niederschlägt.

Im Rahmen der somit notwendigen und sinnvollen Dokumentation und Überwachung der jeweiligen Produktionskette wird jedoch auf diese Weise neben der eigentlichen Produktionskette ein erheblicher zusätzlicher Arbeits- und Organisationsaufwand verursacht, ohne dass hierdurch das eigentliche Produkt verändert wird.

Aufgabe der Erfindung ist es daher, ein Verfahren zur Überwachung und Dokumentation eines verderblichen Produktes zu schaffen, welches mit geringem Arbeits- und Organisationsaufwand insbesondere ohne besondere Vorkenntnisse/Ausbildung zuverlässig durchführbar ist, dabei aber gleichwohl eine sichere und lückenlose Überwachung und Dokumentation der Produktionskette beziehungsweise des verderblichen Produktes gewährleistet.

Diese Aufgabe wird erfindungsgemäß dadurch gelöst, dass eine das verderbliche Produkt repräsentierende Identifikation (ID) durch ein Lesegerät erfasst wird, dass das Erfassen der ID eine Erfassung des Parametersatzes des Produktes auslöst, dass ein Vergleich zwischen dem erfassten Parametersatz und einem Referenzparametersatz durchgeführt wird, und dass ein Kontrollsignal basierend auf dem Vergleich erzeugt und dargestellt wird. Auf diese Weise kann eine vollständige Erfassung des Parametersatzes des verderblichen Produktes sichergestellt werden, wobei hierfür keinerlei besondere Kenntnis oder Ausbildung erforderlich ist. Das Erfassen der Identifikation löst vielmehr eine automatisierte Erfassung des Parametersatzes des verderblichen Produktes aus. Das Erfassen der ID kann manuell oder zeitgesteuert erfolgen, wobei das zeitgesteuerte Erfassen der ID eine zeitgesteuerte Aktivierung des Lesegerätes mit einer voreingestellten ID ohne Erfassung einer "externen" ID umfassen kann. Das Erfassen kann durch eine in das Lesegerät integrierte oder von dem Lesegerät angesteuerte Sensoreinrichtung erfolgen. Hierdurch kann sichergestellt werden, dass der Parametersatz des verderblichen Produktes immer vollständig und in gleichbleibender Qualität erfasst wird. Der Parametersatz kann zumindest einen das verderbliche Produkt charakterisierenden Wert, insbesondere einen Temperaturwert, umfassen. Der Parametersatz des verderblichen Produktes kann beispielsweise auch mehrere Temperaturwerte umfassen, die an voneinander beabstandeten Orten innerhalb des verderblichen Produktes gemessen werden. Es kann sich beispielsweise um eine Oberflächentemperatur und eine Kerntemperatur des verderblichen Produktes handeln. Es ist auch denkbar, dass der Temperaturwert eine Umgebungstemperatur bezeichnet, in der das verderbliche Produkt gelagert ist. Das Verfahren kann eine gleichzeitige Temperaturerfassung an verschiedenen Orten ermöglichen. Der Parametersatz kann beispielsweise auch zumindest eine Gaskonzentration als Wert umfassen, der eine Schutzatmosphäre charakterisiert. Dies kann beispielsweise bei einer Verpackungsstraße eines verderblichen Produktes relevant sein, um eine bestimmte Mindesthaltbarkeit zu gewährleisten. Ein Referenzparametersatz kann mit dem erfassten Parametersatz verglichen werden. Basierend auf den Abweichungen zwischen den einzelnen Werten des Parametersatzes und des Referenzparametersatzes kann ein Kontrollsignal erzeugt und dargestellt werden, wodurch das Ergebnis der Überwachung und Kontrolle des verderblichen Produktes direkt erkennbar ist. Auf diese Weise kann der überwachte Zustand des verderblichen Produktes manipulationssicher überwacht, dokumentiert und auch für Laien nachvollziehbar dargestellt werden. Ein Zugriff auf den Referenzparametersatz kann von einer Autorisierung des Benutzers abhängen. Es kann eine Uhrzeit mit dem Parametersatz verknüpft werden. Das Kontrollsignal kann ebenfalls mit einer Uhrzeit verknüpft werden.

Nützlicherweise kann vorgesehen sein, dass das Lesegerät mit einer Datenbank verbunden wird, dass die ID und der erfasste Parametersatz an die Datenbank übertragen werden, dass durch die Datenbank ein Referenzparametersatz ermittelt wird, der mit der ID verknüpft ist, dass der Vergleich zwischen dem erfassten Parametersatz und dem Referenzparametersatz durch die Datenbank erfolgt, und dass das Kontrollsignal von der Datenbank zumindest an das Lesegerät übertragen wird. Auf diese Weise kann das Lesegerät besonders einfach ausgeführt sein, da der Referenzparametersatz extern in einer Datenbasis der Datenbank gespeichert ist. Weiterhin kann ein lesegerätunabhängiger Zugriff auf verschiedene Referenzparametersätze in der Datenbank ermöglicht werden, so dass verschiedene Lesegerät voneinander unabhängig zur Überwachung und Kontrolle des verderblichen Produktes an verschiedenen Orten verwendet werden können, sofern sie die ID erfassen können. Lesegerätunabhängig bedeutet in diesem Zusammenhang, dass das Lesegerät nur die ID erfassen muss und dass der Referenzparametersatz zentral verwaltet wird und nur bei Bedarf auf ihn zugegriffen wird. Es kann beispielsweise eine Erfassung der ID durch Kunden zugelassen werden, die auf diese Weise eine vorschriftsmäßige Einhaltung der Produktionskette des verderblichen Produktes vor einem eventuellen Erwerb eigenständig überprüfen können. Die ID beziehungsweise der Referenzparametersatz kann in diesem Zusammenhang weitere produktbezogene Informationen bereitstellen, beispielsweise über die Herkunft und die Art der Zubereitung.

Alternativ kann vorgesehen sein, dass das Lesegerät mit einer Datenbank verbunden wird, dass die ID an die Datenbank übertragen wird, dass durch die Datenbank ein Referenzparametersatz ermittelt wird, der mit der ID verknüpft ist, dass der Referenzparametersatz an das Lesegerät übertragen wird, dass durch das Lesegerät der Vergleich zwischen dem Parametersatz und dem Referenzparametersatz erfolgt, und dass das Kontrollsignal von dem Lesegerät zumindest an die Datenbank übertragen wird. Auf diese Weise kann ebenfalls eine lesegerätunabhängige Überwachung und Kontrolle des verderblichen Produktes sichergestellt werden. Weitere produktbezogene Informationen können ebenfalls bereitgestellt werden.

Weiterhin kann vorgesehen sein, dass das Kontrollsignal einen Fehlercode umfasst, wenn eine Abweichung zwischen dem erfassten Parametersatz und dem Referenzparametersatz größer als ein Schwellenwert ist. Der Fehlercode kann beispielsweise eine unzulässige Temperaturabweichung zwischen einem Wert des erfassten Parametersatzes und des Referenzparametersatzes symbolisieren und optional zusätzlich gleichzeitig einen Vorschlag/Befehl zur Behebung des aufgetretenen Fehlers, beispielsweise der Temperaturabweichung, umfassen. Die Temperaturabweichung kann nach Oben oder nach Unten weisen. Ist die Temperatur eines gekühlten verderblichen Produktes unzulässig hoch, so kann der Fehlercode beispielsweise das "aus dem Verkehr ziehen" des erfassten verderblichen Produktes vorschlagen und gleichzeitig eine Absenkung der Solltemperatur des mit der Kühlung des verderblichen Produktes befassten Gerätes vorschlagen/befehlen, um eine zukünftige unzulässige erhöhte Temperatur zu verhindern. Liegt die Temperatur eines gekühlten verderblichen Produktes stark unterhalb einer zulässigen Obergrenze, kann durch den Fehlercode auch eine Erhöhung der Solltemperatur der Kühleinrichtung vorgeschlagen/befohlen werden, um Energie einzusparen. In analoger Weise können auch die Temperaturen von warmen Speisen, beispielsweise bei einer Essensausgabe, überwacht und dokumentiert werden. In einer ein Mindesthaltbarkeitsdatum beeinflussenden Schutzatmosphäre kann ein zuerkanntes Mindesthaltbarkeitsdatum von einer im Rahmen des Parametersatzes erfassten Gaskonzentration abhängen.

Es kann vorgesehen sein, dass das Kontrollsignal durch das Lesegerät visuell und/oder akustisch dargestellt wird. Durch die visuelle und/oder akustische Darstellung des Kontrollsignals kann besonders einfach auf eine unzulässige Abweichung zwischen dem Parametersatz und dem Referenzparametersatz des verderblichen Produktes hingewiesen werden.

Weiterhin kann vorgesehen sein, dass das Kontrollsignal zu Dokumentationszwecken mit der ID verknüpft und in der Datenbank gespeichert wird. Auf diese Weise kann die Dokumentation des erfassten Parametersatzes über die Datenbank global zugänglich gemacht werden, so dass eine übergeordnete Überwachung insbesondere zur Optimierung der Produktionskette des verderblichen Produktes in einfacher Weise realisiert werden kann. Eine Uhrzeit kann in Verbindung mit dem gespeicherten Parametersatz die Dokumentation erleichtern.

Zusätzlich kann vorgesehen sein, dass die Datenbank basierend auf den gespeicherten Parametersätzen, insbesondere den gespeicherten Uhrzeiten, eine Erinnerung/Nachricht erzeugt und an eine für die jeweilige ID zuständige Kontaktstelle übersendet, wenn die letzte Erfassung des Parametersatzes länger als eine vorgebbare Zeitspanne zurückliegt. Die zuständige Kontaktstelle kann beispielsweise das Lesegerät sein, das die letzte Erfassung des Parametersatzes ausgeführt hat. Alternativ kann die zuständige Kontaktstelle auch eine in der Datenbank eingetragene Person/Maschine sein, an die eine vorbestimmte Nachricht zur Erinnerung übersendet wird.

Nützlicherweise kann vorgesehen sein, dass eine Anfrage von der Datenbank an das Lesegerät übertragen wird, um den Parametersatz zu erfassen. Die Anfrage kann die zur Erfassung des Parametersatzes notwendigen Informationen umfassen, beispielsweise Autorisierungen für ein Auslesen der Sensoreinrichtung, Anzahl und Art der zu erfassenden Parameter des Parametersatzes. Auf dieser Weise kann eine dynamische Anpassung des zu erfassenden Parametersatzes lesegerätunabhängig realisiert sein, wobei die Anfrage basierend auf der ID auch ein nicht-autorisiertes Erfassen des Parametersatzes unterbinden kann.

Es kann vorgesehen sein, dass die ID optisch erfasst wird oder dass die ID voreingestellt in dem Lesegerät gespeichert ist. Das optische Erfassen der ID ist ein robustes und zuverlässiges Verfahren, welches mit einer Vielzahl von verschiedenen Lesegeräten ausgeführt werden kann. Eine voreingestellte und in dem Lesegerät gespeicherte ID kann im Rahmen einer zeitgesteuerten Aktivierung des Lesegerätes Verwendung finden.

Die vorliegende Erfindung betrifft weiterhin ein Kontrollsystem, das zur Ausführung jedes der vorstehend beschriebenen Verfahren eingerichtet ist.

Die vorliegende Erfindung wird im Folgenden in Bezugnahme auf die Zeichnungen beispielhaft erläutert, wobei gleiche Bezugszeichen gleiche oder gleichartige Teile bezeichnen.

Es zeigen:
- Figur 1: eine schematische Darstellung eines Kontrollsystems;
- Figur 2: ein Flussdiagram eines Verfahrens;
- Figur 3: ein Flussdiagram eines weiteren Verfahrens; und
- Figur 4: Datenstrukturen.

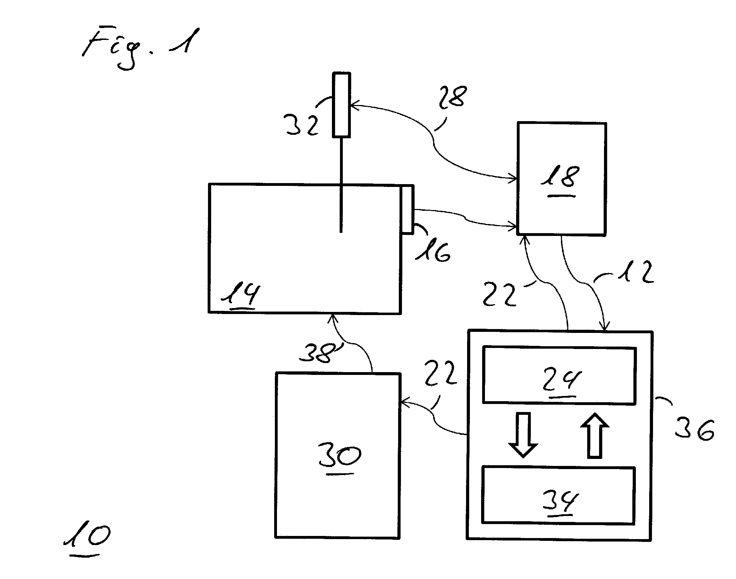

Figur 1 zeigt eine schematische Darstellung eines Kontrollsystems 10. Das dargestellte Kontrollsystem 10 umfasst zwingend eine Sensoreinrichtung 32, ein Lesegerät 18, eine Identifikation (ID) 16 und ein Datenverarbeitungssystem 36 mit einer Datenbank 24 und einer zugehörigen Datenbasis 34. Optional kann das Kontrollsystem 10 ein Steuergerät 30 umfassen. Das Kontrollsystem 10 kann zur Überwachung und Dokumentation eines Parametersatzes 12 eines verderblichen Produktes 14 genützt werden. Das verderbliche Produkt 14 ist dabei durch die ID 16 eindeutig gekennzeichnet, beispielsweise durch Lagerung des verderblichen Produktes 14 in einem mit der ID 16 gekennzeichneten Behältnis oder an einem mit der ID 16 gekennzeichneten Ort. Die Sensoreinrichtung 32 kann eine beliebige Anzahl von Sensoren umfassen, denen die gleiche ID 16 zugeordnet ist oder denen verschiedene IDs zugeordnet sind. Die Sensoreinrichtung 32 kann auch direkt mit dem Datenbanksystem verbunden sein, zum Beispiel drahtlos. Beispielsweise kann die Sensoreinrichtung 32 in das Lesegerät 18 vollständig oder teilweise integriert sein.

Das Lesegerät 18 kann die Identifikation 16 umfassen, die das verderbliche Produkt 14, beispielsweise wie vorstehend beschrieben, kennzeichnet. Durch die Erfassung der Identifikation 16 kann das Lesegerät 18 beispielsweise eine Anfrage 28 an die Sensoreinrichtung 32 auslösen, durch die der Parametersatz 12 des verderblichen Produktes 14 erfasst wird. Der Parametersatz 12 kann beispielsweise zumindest einen Temperaturwert des verderblichen Produktes 14 umfassen. Der von der Sensoreinrichtung 32 erfasste Parametersatz 12 der verderblichen Produktes 14 kann dementsprechend aufgrund der Anfrage 28 von der Sensoreinrichtung 32 ermittelt und an das Lesegerät 18 übertragen werden. Das Lesegerät 18 kann den erfassten Parametersatz 12 an die Datenbank 24 des Datenbanksystems 36 übertragen. Die Datenbank 24 kann den erfassten Parametersatz mit einem Referenzparametersatz 20 vergleichen, der beispielsweise der Datenbasis 34 der Datenbank 24 entnehmbar sein kann. Basierend auf dem Vergleich, kann ein Kontrollsignal 22 durch die Datenbank 24 erzeugt werden, welches beispielsweise an das Lesegerät 18 übertragen werden kann. Das Lesegerät 18 kann das Kontrollsignal 22 darstellen. Die Darstellung des Kontrollsignals 22 auf dem Lesegerät 18 kann beispielsweise akustisch und/oder optisch erfolgen. Optional kann das Kontrollsignal 22 auch an das optionale Steuergerät 30 übertragen werden. Das Steuergerät 30 kann basierend auf dem Kontrollsignal 22 beispielsweise ein Steuersignal 38 erzeugen, um eine Anpassung des gemessenen Parametersatzes 12 des verderblichen Produktes 14 zu erreichen. Dies kann beispielsweise durch eine Absenkung oder eine Erhöhung der Solltemperatur einer das verderbliche Produkt 14 heizenden/kühlenden Einrichtung erfolgen.

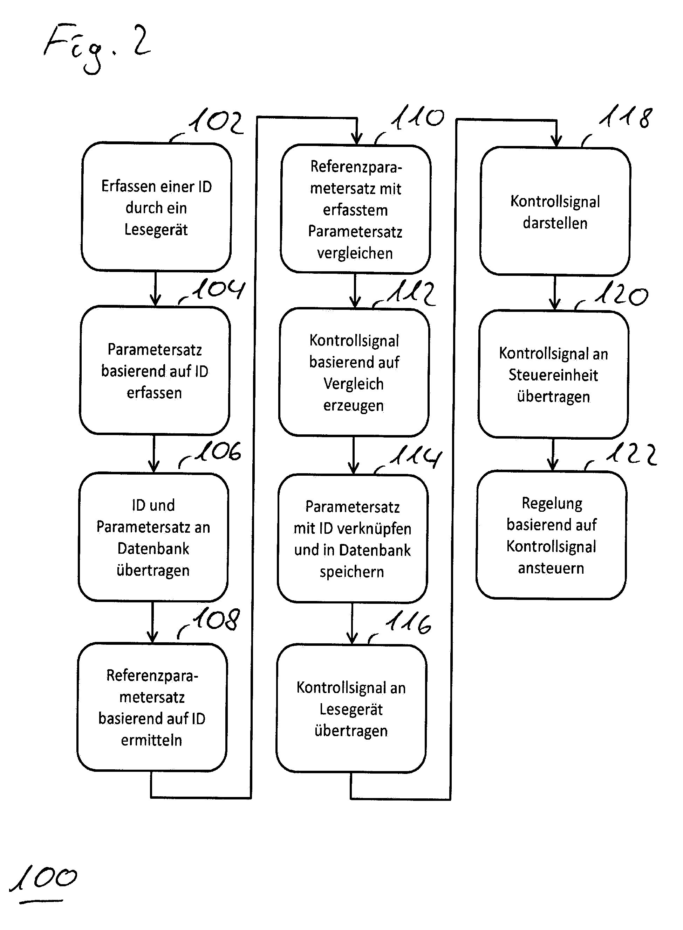

Figur 2 zeigt ein Flussdiagram eines Verfahrens. Das in Figur 2 dargestellte Verfahren 100 kann zunächst eine nicht explizit dargestellte Autorisierung eines Benutzers gegenüber dem Kontrollsystem erfordern. Das dargestellte Verfahren kann anschließend mit einem Schritt 102 beginnen, in welchem eine ID durch ein Lesegerät erfasst wird. Die ID kann beispielweise ein optisch erfassbarer Barcode, ein Smart-Tag, oder dergleichen sein. Das Lesegerät kann beispielsweise ein einfacher Barcodescanner oder ein Smartphone sein. Durch das Erfassen der ID durch das Lesegerät kann in dem sich anschließenden Schritt 104 ein das verderbliche Produkt charakterisierender Parametersatz erfasst werden. Zu diesem Zweck kann die ID selbst notwendige Informationen zur Erfassung des Parametersatzes erhalten. Beispielsweise kann die ID Information über die Anzahl und Art der zu erfassenden Werte des Parametersatzes umfassen. Der Parametersatz kann beispielsweise zumindest einen Temperaturwert umfasst. Das Erfassen des Parametersatzes kann mit einer Sensoreinrichtung erfolgen, welche beispielsweise nur durch in der ID enthaltene Information aktivierbar sein kann. Die zur Übertragung des Parametersatzes von der Sensoreinrichtung zu dem Lesegerät verwendete Kopplung kann beispielsweise drahtlos sein und insbesondere eine Bluetooth- beziehungsweise NFC- oder eine WLAN-Verbindung sein. Nach dem Erfassen des Parametersatzes basierend auf der ID können in einem sich anschließenden Schritt 106 die ID und der erfasste Parametersatz an eine entfernte Datenbank übertragen werden. In einem sich anschließenden Schritt 108 kann in der Datenbank aus einer Datenbasis der Datenbank ein Referenzparametersatz ermittelt werden, der mit der ID verknüpft ist und in seinem Aufbau dem Parametersatz entspricht. Der Referenzparametersatz kann insbesondere Sollwerte für die einzelnen erfassten Werte des Parametersatzes umfassen. In einem sich anschließenden Schritt 110 kann der ermittelte Referenzparametersatz mit dem erfassten Parametersatz verglichen werden, beispielsweise in dem die Datenbank beherbergenden Datenbanksystem. Basierend auf einem derartigen Vergleich kann in einem anschließenden Schritt 112 ein Kontroll- oder Stellsignal erzeugt werden, welches beispielsweise nach dem Prinzip eines Soll-Ist-Vergleichs zwischen den einzelnen Referenzwerten und den einzelnen erfassten Werten des Parametersatzes aufgebaut ist. In einem sich anschließenden Schritt 114 kann der erfasste Parametersatz mit der ID verknüpft und in der Datenbank, insbesondere der Datenbasis der Datenbank gespeichert werden. Schritt 114 kann bei Bedarf auch früher beziehungsweise später während der Durchführung des Verfahrens 100 erfolgen. In einem anschließenden Schritt 116 kann das Kontrollsignal an das Lesegerät übertragen werden. Das an das Lesegerät übertragene Kontrollsignal kann in einem sich anschließenden Schritt 118 durch das Lesegerät dargestellt werden. Die Darstellung des Kontrollsignals kann insbesondere optisch und/oder akustisch durch das Lesegerät erfolgen. Beispielsweise kann ein Warnton durch das Lesegerät erzeugt werden, wenn einzelne der erfassten Werte des Parametersatzes zu stark von den vorgegebenen Werten des Referenzparametersatzes abweichen. Auf diese Weise kann eine Gesundheitsgefährdung durch das verderbliche Produkt reduziert werden. In einem sich anschließenden Schritt 120 kann das Kontrollsignal auch an eine Steuereinheit übertragen werden. Das Kontrollsignal kann durch das Lesegerät und/oder durch das Datenbanksystem an die Steuereinheit übertragen werden. Optional kann auch eine weitere Übertragung an andere Stellen vorgesehen sein, beispielsweise einen Empfänger bei einer für die Lebensmittelüberwachung zuständigen Behörde, um Unregelmäßigkeiten frühzeitig zu melden. Die Steuereinheit kann dazu eingerichtet sein, in einem anschließenden Schritt 122 eine Regelung basierend auf dem Kontrollsignal anzusteuern, um den zu stark abweichenden Wert des verderblichen Produktes zu korrigieren. Beispielsweise kann die Regelung eine Kühlleistung reduzieren oder erhöhen, um eine Temperatur des verderblichen Produktes innerhalb eines vorgesehen Bereiches zu halten. Auf diese Weise kann einerseits ein vorzeitiges Verderben des verderblichen Produktes und andererseits eine unnötige starke Kühlung des verderblichen Produktes vermieden werden. Als Regelung kann beispielsweise eine steuerbare Kühl-/Heizeinrichtung oder Gaszuführung zur Erzeugung einer Schutzatmosphäre verstanden werden.

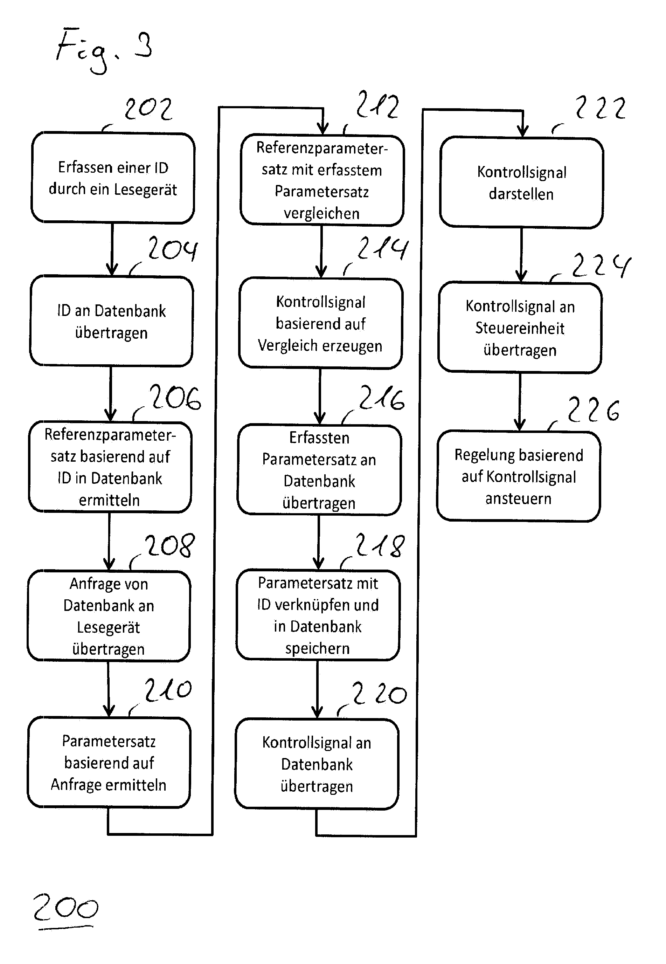

Figur 3 zeigt ein weiteres Verfahren 200. Das in Figur 3 dargestellte weitere Verfahren 200 kann analog zu dem Verfahren 100 gemäß Figur 2 mit dem Erfassen einer ID durch ein Lesegerät bei einem Schritt 202 starten. Optional kann zuvor wieder eine Autorisierung einer das Lesegerät bedienenden Person erfolgen. Das Lesegerät kann auch zeitgesteuert automatisch arbeiten. In einem sich anschließenden Schritt 204 kann die erfasste ID direkt an eine Datenbank übertragen werden. In einem sich anschließenden Schritt 206 kann ein Referenzparametersatz basierend auf der ID in der Datenbank ermittelt werden. In einem sich hieran anschließenden Schritt 208 kann eine Anfrage von der Datenbank an das Lesegerät übertragen werden. Die Anfrage kann insbesondere die Erfassung des Parametersatzes durch das Lesegerät auslösen. In einem sich anschließenden Schritt 210 kann der Parametersatz basierend auf der Anfrage ermittelt werden. Die Anfrage kann beispielsweise ein nicht-autorisiertes Auslesen der Sensoreinrichtung verhindern. In einem sich anschließenden Schritt 212 kann der Referenzparametersatz mit dem erfassten Parametersatz verglichen werden. Der Referenzparametersatz kann zu diesem Zweck von der Datenbank an das Lesegerät übertragen werden und in dem Lesegerät mit dem Parametersatz verglichen werden. Dies kann beispielsweise derart realisiert sein, dass der Referenzparametersatz als Teil der Anfrage an das Lesegerät übermittelt worden ist oder diese im Wesentlichen darstellt. In einem sich hieran anschließenden Schritt 214 kann ein Kontrollsignal basierend auf dem Vergleich erzeugt werden. Im Anschluss daran kann in einem Schritt 216 der erfasste Parametersatz an die Datenbank übertragen werden. In einem anschließenden Schritt 218 kann der Parametersatz mit der ID verknüpft und in der Datenbank gespeichert werden. In einem anschließenden optionalen Schritt 220 kann das erzeugte Kontrollsignal auch an die Datenbank übertragen werden. In einem anschließenden Schritt 222 kann das Kontrollsignal durch das Lesegerät dargestellt werden, insbesondere akustisch und/oder optisch. In einem anschließenden Schritt 224 kann das erzeugte Kontrollsignal auch optional an einer Steuereinheit übertragen werden. In einem anschließenden Schritt 226 kann analog zu Schritt 122 eine Regelung basierend auf dem Kontrollsignal angesteuert werden.

Das in Figur 3 dargestellte weitere Verfahren 200 unterscheidet sich von dem Verfahren 100 gemäß Figur 2 somit insbesondere dadurch, dass der Vergleich zwischen dem Referenzparametersatz und dem erfassten Parametersatz von der Datenbank in das Lesegerät verlagert wird. Hinsichtlich seiner sonstigen Funktionsweise sind das Verfahren 100 und das weitere Verfahren 200 in wesentlichen Teilen identisch, woraus sich insbesondere auch Möglichkeiten für alternative Anordnungen der sequenziell dargestellten Verfahrensschritte ergeben.

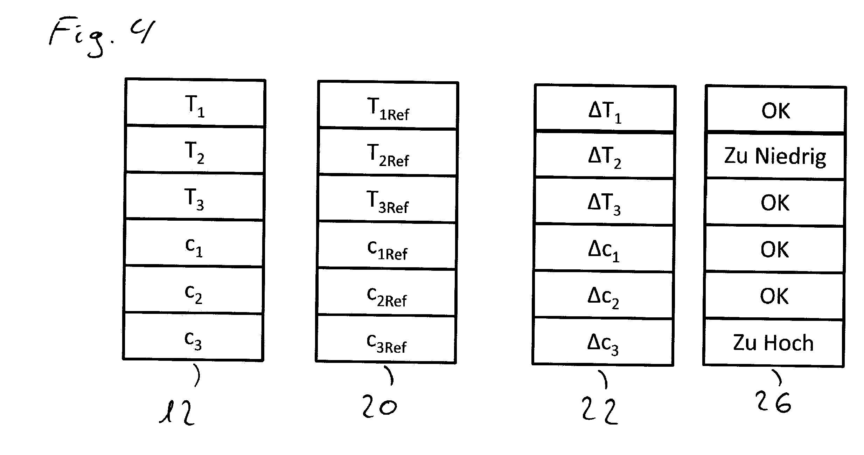

Figur 4 zeigt Datenstrukturen. In Figur 4 dargestellt ist zunächst der Parametersatz 12. Der in Figur 4 dargestellte Parametersatz 12 umfasst zunächst drei voneinander unabhängige Temperaturwerte T₁, T₂ und T₃ sowie drei weitere Konzentrationswerte c₁, c₂ und c₃. Die Temperaturwerte T₁ und T₂ können beispielsweise durch zwei Temperatursensoren erfasst werden, die an unterschiedlichen Stellen innerhalb eines einzigen Kühlbehälters angeordnet sind. T₃ kann beispielsweise ein weiterer Temperaturwert sein, der in einem Wärmebehälter gemessen wird. Die Konzentrationswerte c₁, c₂ und c₃ können beispielsweise eine in einer Verpackungsstraße vorhandene Schutzatmosphäre charakterisieren und in Abhängigkeit des verderblichen Produktes beispielsweise die Kohlendioxidkonzentration, die Stickstoffkonzentration und die Sauerstoffkonzentration über Gassensoren bestimmen. Derartige Schutzatmosphären haben einen erheblichen Einfluss auf die Haltbarkeit des verpackten verderblichen Produktes.

Figur 4 zeigt weiterhin einen Referenzparametersatz 20, welcher Referenzwerte T_{1Ref}, T_{2Ref}, T_{3Ref}, c_{1Ref}, c_{2Ref} und c_{3Ref} für die Temperatur- und Konzentrationswerte des Parametersatzes 12 beinhaltet. Der Parametersatz 12 und der zugehörige Referenzparametersatz 20, die jeweils mit der ID verknüpft sind oder verknüpft werden, können zumindest einen Wert umfassen.

Ein Kontrollsignal 22 kann basierend auf einer Differenzbildung zwischen dem Parametersatz 12 und dem Referenzparametersatz 20 erzeugt werden und dementsprechend Temperaturdifferenzen und Konzentrationsdifferenzen als Werte umfassen. Das Kontrollsignal 22 kann weiterhin auch einen Fehlercode 26 umfassen, welcher basierend auf vorgebbaren Schwellenwerten für die einzelnen erfassten Temperatur- und Konzentrationswerte eine Bewertung der Abweichung nach einem Soll-Ist-Prinzip charakterisieren kann. So kann beispielsweise die Temperaturdifferenz ΔT₁ ausreichend klein sein, während die Temperaturdifferenz ΔT₂ außerhalb eines vorgebbaren Schwellenbereichs liegt. Beispielsweise kann die Temperaturdifferenz ΔT₂ vorzeichenbehaftet zu niedrig, dass hießt beispielsweise deutlich kleiner als 0 sein, wenn ein erfasster Temperaturwert T₂ deutlich niedriger als der geforderte Temperaturwert T_{2Ref} liegt. In diesem Fall kann es sinnvoll sein, basierend auf dem Kontrollsignal 22 eine Regelung, beispielsweise eine Kühlvorrichtung anzusteuern, um einen Temperatursollwert zu erhöhen, und so zur Energieeinsparung eine Verringerung der Temperaturdifferenz ΔT₂ zu erreichen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Kontrollsystem
- 12: Parametersatz
- 14: Produkt
- 16: Identifikation (ID)
- 18: Lesegerät
- 20: Referenzparametersatz
- 22: Kontrollsignal
- 24: Datenbank
- 26: Fehlercode
- 28: Anfrage
- 30: Steuergerät
- 32: Sensoreinrichtung
- 34: Datenbasis
- 36: Datenbanksystems
- 38: Steuersignal
- 100: Verfahren
- 102: Erfassen einer ID durch ein Lesegerät
- 104: Parametersatz basierend auf ID erfassen
- 106: ID und Parametersatz an Datenbank übertragen
- 108: Referenzparametersatz basierend auf ID ermitteln
- 110: Referenzparametersatz mit erfasstem Parametersatz vergleichen
- 112: Kontrollsignal basierend auf Vergleich erzeugen
- 114: Parametersatz mit ID verknüpfen und in Datenbank speichern
- 116: Kontrollsignal an Lesegerät übertragen
- 118: Kontrollsignal darstellen
- 120: Kontrollsignal an Steuereinheit übertragen
- 122: Regelung basierend auf Kontrollsignal ansteuern
- 200: weitere Verfahren
- 202: Erfassen einer ID durch ein Lesegerät
- 204: ID an Datenbank übertragen
- 206: Referenzparametersatz basierend auf ID in Datenbank ermitteln
- 208: Anfrage von Datenbank an Lesegerät übertragen
- 210: Parametersatz basierend auf Anfrage ermitteln
- 212: Referenzparametersatz mit erfasstem Parametersatz vergleichen
- 214: Kontrollsignal basierend auf Vergleich erzeugen
- 216: Erfassten Parametersatz an Datenbank übertragen
- 218: Parametersatz mit ID verknüpfen und in Datenbank speichern
- 220: Kontrollsignal an Datenbank übertragen
- 222: Kontrollsignal darstellen
- 224: Kontrollsignal an Steuereinheit übertragen
- 226: Regelung basierend auf Kontrollsignal ansteuern

## Patentansprüche

1. Verfahren (100) zur Kontrolle eines Parametersatzes (12) eines verderblichen Produktes (14), **dadurch gekennzeichnet,**
- **dass** eine das verderbliche Produkt (14) repräsentierende Identifikation (ID) (16) durch ein Lesegerät (18) erfasst wird,
- **dass** das Erfassen der ID (16) eine Erfassung des Parametersatzes (12) des Produktes (14) auslöst,
- **dass** ein Vergleich zwischen dem erfassten Parametersatz (12) und einem Referenzparametersatz (20) durchgeführt wird, und
- **dass** ein Kontrollsignal (22) basierend auf dem Vergleich erzeugt und dargestellt wird.

2. Verfahren (100) nach Anspruch 1, **dadurch gekennzeichnet,**
- **dass** das Lesegerät (18) mit einer Datenbank (24) verbunden wird,
- **dass** die ID (16) und der erfasste Parametersatz (12) an die Datenbank (24) übertragen werden,
- **dass** durch die Datenbank (24) ein Referenzparametersatz (20) ermittelt wird, der mit der ID (16) verknüpft ist,
- **dass** der Vergleich zwischen dem erfassten Parametersatz (12) und dem Referenzparametersatz (20) durch die Datenbank (24) erfolgt, und
- **dass** das Kontrollsignal (22) von der Datenbank (24) zumindest an das Lesegerät (18) übertragen wird.

3. Verfahren (100) nach Anspruch 1, **dadurch gekennzeichnet,**
- **dass** das Lesegerät (18) mit einer Datenbank (24) verbunden wird,
- **dass** die ID (16) an die Datenbank (24) übertragen wird,
- **dass** durch die Datenbank (24) ein Referenzparametersatz (20) ermittelt wird, der mit der ID (16) verknüpft ist,
- **dass** der Referenzparametersatz (20) an das Lesegerät (18) übertragen wird,
- **dass** durch das Lesegerät (18) der Vergleich zwischen dem Parametersatz (12) und dem Referenzparametersatz (20) erfolgt, und
- **dass** das Kontrollsignal (22) von dem Lesegerät (18) zumindest an die Datenbank (24) übertragen wird.

4. Verfahren (100) nach einem der vorhergehenden Ansprüche, **dadurch gekennzeichnet, dass** das Kontrollsignal (22) einen Fehlercode (26) umfasst, wenn eine Abweichung zwischen dem erfassten Parametersatz (12) und dem Referenzparametersatz (20) größer als ein Schwellenwert ist.

5. Verfahren (100) nach einem der vorhergehenden Ansprüche, **dadurch gekennzeichnet, dass** das Kontrollsignal (22) durch das Lesegerät (18) visuell und/oder akustisch dargestellt wird.

6. Verfahren (100) nach einem der vorhergehenden Ansprüche, **dadurch gekennzeichnet, dass** das Kontrollsignal (22) zu Dokumentationszwecken mit der ID (16) verknüpft und in der Datenbank (24) gespeichert wird.

7. Verfahren (100) nach einem der vorhergehenden Ansprüche, **dadurch gekennzeichnet, dass** eine Anfrage (28) von der Datenbank (24) an das Lesegerät (18) übertragen wird, um den Parametersatz (12) zu erfassen.

8. Verfahren (100) nach einem der vorhergehenden Ansprüche, **dadurch gekennzeichnet, dass** die ID (16) optisch erfasst wird oder dass die ID (16) voreingestellt in dem Lesegerät (18) gespeichert ist.

9. Kontrollsystem (10), das zur Ausführung des Verfahrens (100) nach einem der vorhergehenden Ansprüche eingerichtet ist.
